# EUROPÄISCHE PATENTSCHRIFT

(11) **EP 3 181 641 B1**
(45) Veröffentlichungstag und Bekanntmachung des Hinweises auf die Patenterteilung: **15.04.2020**
(21) Anmeldenummer: 16203441.7
(22) Anmeldetag: 12.12.2016
(51) Int. Cl.: C08L 77/02, C08L 77/06, C08J 3/12, B29C 67/00, C08K 5/00

(54) **POLYMERPULVER FÜR POWDER BED FUSION-VERFAHREN**
POLYMER POWDER FOR POWDER BED FUSION METHOD
POUDRE POLYMÈRE POUR PROCÈDE DE FUSION DE LIT DE POUDRE

(30) Priorität: 14.12.2015 EP 15199918
(43) Veröffentlichungstag der Anmeldung: 21.06.2017
(73) Patentinhaber: Evonik Operations GmbH, 45128 Essen (DE)
(72) Erfinder: Diekmann, Wolfgang, 45731 Waltrop (DE); Grebe, Maik, 44805 Bochum (DE)
(74) Vertreter: Evonik Patent Association

(56) Entgegenhaltungen:
- EP-A1- 1 424 354
- WO-A1-2012/076528
- DE-A1- 19 747 309
- OWENS D K ET AL: "ESTIMATION OF THE SURFACE FREE ENERGY OF POLYMERS", JOURNAL OF APPLIED POLYMER SCIENCE, NEW YORK, NY, US, Bd. 13, 1. Januar 1969 (1969-01-01), Seiten 1741-1747, XP001030165, DOI: 10.1002/APP.1969.070130815
- DEE G T ET AL: "The molecular weight and temperature dependence of polymer surface tension: Comparison of experiment with interface gradient theory", JOURNAL OF COLLOID AND INTERFACE SCIENCE, ACADEMIC PRESS, NEW YORK, NY, US, Bd. 152, Nr. 1, 1. August 1992 (1992-08-01), Seiten 85-103, XP024206148, ISSN: 0021-9797, DOI: 10.1016/0021-9797(92)90010-J [gefunden am 1992-08-01]

## Beschreibung

Die vorliegende Erfindung betrifft ein Polymerpulver zur Verwendung in einem Powder Bed Fusion-Verfahren.

Die zügige Bereitstellung von Prototypen oder Kleinserien ist eine in der jüngsten Zeit häufig gestellte Aufgabe. Verfahren, die dies ermöglichen, werden Rapid Prototyping, Rapid Manufacturing, Additive Fabrication-Verfahren oder 3D Printing genannt. Besonders geeignet sind Verfahren, bei denen schichtweise durch selektives Aufschmelzen und/oder Verfestigen von pulverförmigen Werkstoffen die gewünschten Strukturen hergestellt werden. Die nach diesem Prinzip arbeitenden Verfahren werden unter dem Oberbegriff Powder Bed Fusion zusammengefasst.

Ein Beispiel für ein Powder Bed Fusion-Verfahren ist das Laser-Sintern, welches ausführlich in der Patentschriften US 6136948 und WO 9606881 beschrieben wird. Weitere Beispiele für Powder Bed Fusion-Verfahren sind in den Patentschriften US6531086 und EP1740367 beschrieben. In der DE 19747309 ist ein Pulver offenbart, welches gut für eine Anwendung im Powder Bed Fusion-Verfahren geeignet ist.

Die Powder Bed Fusion-Technologie umfasst unter anderem das Direkte Metall-Lasersintern (DMLS), das Elektronenstrahlschmelzen (EBM), das Selective Heat Sintering (SHS), das selektive Laserschmelzen (SLM), das selektive Lasersintern (SLS), das Selective Absorbing Sintering (SAS) und das Selective Inhibition Sintering (SIS). Bei allen Verfahren wird angestrebt, dass die mittels der Verfahren hergestellten Bauteile möglichst die gleiche Dichte haben wie der polymere Werkstoff, aus dem das Pulver hergestellt worden ist. Lunker und/oder Einschlüsse sind entsprechend unerwünscht. Ein gutes Zusammenfließen der an- bzw. aufgeschmolzenen Pulverpartikel ist demnach notwendig. Um Oberflächendefekte an Bauteilen zu vermeiden, wird auch von einem mehrmals in einem Powder Bed Fusion-Verfahren verwendetes Pulver ein gutes Zusammenfließen der an- bzw. aufgeschmolzenen Pulverpartikel gefordert. Eine einfache Reduzierung der Viskosität des polymeren Werkstoffs, um das Zusammenfließen der polymeren Partikel zu verbessern, ist nicht zielführend, da bei niedriger Viskosität die Formstabilität der Schmelze leidet. Dieser Effekt führt zu nicht maßhaltigen Bauteilen und ist daher nicht erwünscht.

Aufgabe der vorliegenden Erfindung ist es, ein Pulver aus einem polymeren Werkstoff bereitzustellen, welches ein gutes Zusammenfließen der aufgeschmolzenen Pulverpartikel erlaubt, deren Schmelze aber gleichzeitig eine ausreichend hohe Formstabilität aufweist, welches die Herstellung von maßhaltigen Bauteilen erlaubt.

Überraschend wurde die Aufgabe durch ein Pulver gelöst, welches mit einer hydrophoben Substanz beschichtet ist, welche ausgewählt ist aus der Gruppe bestehend aus gesättigten oder ungesättigten Fettalkoholen, gesättigten und ungesättigten Fetten, Wachsen Lactamen, Alkenen, Alkanen und Mischungen daraus, vorzugsweise Alkane und Alkene, wobei Alkane und Mischungen mit Alkanen, die mindestens 50 Gew.-%, vorzugsweise 70 Gew.-% und bevorzugt 90 Gew.-% Alkane, bezogen auf das Gesamtgewicht der hydrophoben Substanzen, enthalten, bevorzugt sind. Besonders bevorzugte Fettalkohole weisen zwölf bis 30 Kohlenstoffatome auf. Besonders bevorzugte Fette sind Triglyceride mit gesättigten oder ungesättigten Fettsäuren aus zwölf bis 30 Kohlenstoffatomen. Beispiele für Wachse sind Ester von Wachssäuren mit den zuvor genannten Fettalkoholen. Besonders bevorzugte Lactame weisen sechs bis 15 C-Atome auf. Besonders bevorzugte Alkene haben zwölf bis 40 C-Atome. Besonders bevorzugte Alkane weisen elf bis 40 C-Atome auf.

Insofern sind erfindungsgemäße Polymerpulver, die durch die Beschichtung mit den hydrophoben Substanzen erhältlich sind, eine besonders bevorzugte Ausführungsform der Erfindung.

In einer bevorzugten Ausführungsform beträgt die freie Oberflächenenergie der Polymerpulver weniger als 35 mN/m. Besonders bevorzugt besitzt das Pulver eine freie Oberflächenenergie von weniger als 32 mN/m, ganz besonders bevorzugt von weniger als 30 mN/m. Die freie Oberflächenenergie wird dabei mittels einer Kontaktwinkelmessung nach der Kapillarsteighöhenmethode unter Einsatz der Washburn-Gleichung und dem Auswerteverfahren nach Owens, Wendt, Rabel und Kaelble ermittelt. Die Kontaktwinkelmessungen werden dabei mit dem Prozessor Tensiometer K12 der Firma Krüss bei Normklima (23 °C, 50% Luftfeuchtigkeit) durchgeführt und mit der installierten Software K121.2b ausgewertet. Als Vorbereitung der Kontaktwinkelmessung wird das Pulver mittels eines Stampfvolumeter (STAV 2003/Firma J. Engelsmann) mit 1000 Hüben vorverdichtet. Die Kontaktwinkelmessung wird jeweils in den Lösungsmitteln Diiodmethan, Ethylenglykol und einer 80/20-Mischung aus Wasser und Ethanol durchgeführt.

Überraschend wurde gefunden, dass durch die Beschichtung der Pulverpartikel mit hydrophoben Substanzen das Zusammenfließen der aufgeschmolzenen Pulverpartikel verbessert werden kann und die Schmelze gleichzeitig eine ausreichend hohe Formstabilität besitzt. Insofern sind mit hydrophoben Substanzen beschichtete Polymerpulver bevorzugte Polymerpulver dieser Erfindung.

Oberflächen mit einem Kontaktwinkel von über 90° gegenüber Wasser werden als hydrophob bezeichnet. Hydrophobe Oberflächen bestehen in der Regel aus hydrophoben Substanzen oder sind von diesen bedeckt. Der Kontaktwinkel soll dabei mit dem DSA100S der Firma Krüss gemessen werden (automatisierte Messung nach Herstellerangabe). Bevorzugt haben die der hydrophoben Substanzen einen Kontaktwinkel von über 120° gegenüber Wasser.

Die Prozesstemperatur wird bei der Verarbeitung der erfindungsgemäßen Polymeren bis ca. 10°C unter dem Schmelzpunkt des Polymerpulvers eingestellt, um den Verzug der herzustellenden Objekte zu minimieren. Zudem soll der Curl-Effekt vermieden werden, der den Bauprozess stört. Die Polymerpartikel sollen durch die Prozesstemperatur aber noch nicht gesintert oder gar geschmolzen werden, da dies den Ausbau der hergestellten Objekte aus dem Pulverkuchen erschweren würde. Auch der Pulverauftrag würde durch angeschmolzene Partikel erschwert.

Üblicherweise werden den Pulvern, die im Powder Bed Fusion-Verfahren eingesetzt werden, Additive zugesetzt, die bei der Prozesstemperatur noch fest sind. Überraschend wurde gefunden, dass es möglich ist, die Polymerpartikeln mit hydrophoben Substanzen zu beschichten, deren Schmelzpunkt deutlich unter der Prozesstemperatur liegt. D.h. die hydrophoben Substanzen liegen bei den üblichen Prozesstemperaturen in flüssiger Form vor. Der Schmelzpunkt der hydrophoben Substanzen bei Normaldruck (1013 hPa) liegt daher vorzugsweise unter 160 °C (DIN 53765, DSC 7 von Perkin Elmer, Heizrate 20K/min). Bevorzugt liegt der Schmelzpunkt der hydrophoben Substanzen unter 120 °C und besonders bevorzugt unter 90°C. Der Siedepunkt der hydrophoben Substanzen sollte jedoch deutlich oberhalb der Prozesstemperatur liegen. Bevorzugt haben die hydrophoben Substanzen einen Siedepunkt bei Normaldruck von über 190 °C (DIN 53765, DSC 7 v. Perkin Elmer, Heizrate 20K/min). Ganz besonders bevorzugt haben die hydrophoben Substanzen einen Siedepunkt bei Normaldruck von über 300 °C.

Die Menge an hydrophober Substanz, mit der das Polymerpulver beschichtet wird, beträgt vorzugsweise zwischen 0,15 und 20 Gew.-%, bezogen auf das Gesamtgewicht aus Polymerpulver und hydrophober Substanz. Bevorzugt beträgt der Anteil zwischen 3 und 15 Gew.-%, besonders bevorzugt zwischen 5 und 12 Gew.-%. Die Beschichtung des Polymerpulvers erfolgt vorzugsweise bei Temperaturen von maximal 100 °C, bevorzugt bei maximal 80 °C (bei Normaldruck).

Neben dem guten Zusammenfließen der Partikel und der Formstabilität der Schmelze ist die Homogenität der Schmelze für Powder Bed Fusion Verfahren von Vorteil. Die Homogenität der Schmelze hängt von der Form der Pulverschüttung der aufzuschmelzenden Partikel ab. Die Form der Pulverschüttung kann durch die Wahl der Partikelform positiv beeinflusst werden. Eine für Powder Bed Fusion-Verfahren optimal Pulverschüttung kann durch Partikel mit einer Sphärizität von mindestens 0,5 erreicht werden. Bevorzugt beträgt die Sphärizität der Partikel mindestens 0,7. Besonders bevorzugt beträgt die Sphärizität der Partikel mindestens 0,9. Die Sphärizität nach Wadell wird gemäß ISO 13322-1:2014 mit QICPIC/R Hochleistungs-Bildanalyse der Fa. Sympatec gemessen mit 500 Bildern/s mit 2336x1728 quadratischen Pixeln und 1 ns Belichtungszeit und 1 Million ausgewerteten Partikeln; 50g Pulver werden trocken dispergiert mittels Trockendispergierer RODOS/L und Präzisionsschwingrinne VIBRI /L.

Grundsätzlich eignen sich alle bekannten Polymerpulver für den Einsatz in Powder Bed Fusion-Verfahren. Sollen die hergestellten Bauteile möglichst die gleiche Dichte haben wie der polymere Werkstoff, sind jedoch teilkristalline Polymere von Vorteil, wobei es besonders vorteilhaft ist, wenn das Polymerpulver mindestens ein Polyamid (PA) oder ein Copolyamid umfasst. Bevorzugt werden die Polymere ausgewählt aus Polyamiden und Copolyamiden. Besonders geeignet sind PA11, PA12, PA613 und PA106. Ganz besonders geeignet ist PA12.

Bevorzugte Polymerpulver weisen einen etarel-Wert von 1,55 bis 2 auf. Der etarel-Wert wird nach ISO 307 gemessen (Schott AVS Pro, Lösemittel m-Kresol sauer, Volumetrisches Verfahren, Doppelbestimmung, Lösetemperatur 100 °C, Lösezeit 2h, Polymerkonzentration 5g/l, Messtemperatur 25 °C).

Weiterhin ist es bevorzugt, wenn die Polymerpulver eine Korngröße d₅₀ von 40 µm bis 95 µm, besonders bevorzugt 40 µm bis 70 µm aufweisen. Die Korngröße d₅₀ wie auch die in den Beispielen angegebenen Werte d₁₀ und d₉₀ werden durch Laserbeugung bestimmt (Malvern Mastersizer 2000, Trockenmessung, 20-40 g Pulver werden mittels Scirocco Trockendispergiergerät zudosiert, Zuführrate Rüttelrinne 70%, Dispergierluftdruck 3 bar; die Messzeit der Probe 5 Sekunden (5000 Einzelmessungen), Brechungsindex und Blaulichtwert ist mit 1,52 festgelegt; Auswertung über Mie-Theorie).

Ein weiterer Gegenstand der Erfindung ist ein Verfahren zur Herstellung eines erfindungsgemäßen Polymerpulvers. Hierzu wird das Polymerpulver mit einer hydrophoben Substanz beschichtet. Die Polymerpulver können mit den hydrophoben Substanzen beschichtet werden, indem die hydrophoben Substanzen in einem geeigneten Lösemittel wie Alkoholen mit mindestens vier C-Atomen (wie 1-Butanol oder 1-Hexanol), Testbenzin nach DIN 51632-1 oder 51632-2 oder Terpentinöl (CAS 8006-64-2) gelöst und dann mit dem zu beschichtenden Pulver gemischt werden. Das Lösemittel kann danach abgezogen werden und die hydrophoben Substanzen verbleiben gleichmäßig verteilt auf den Pulverpartikeln. Alternativ kann die hydrophobe Substanz auf das Polymerpulver gesprüht werden. Darüber hinaus kann das beschichtete Polymerpulver mittels Heißmischen gewonnen werden. Hierzu werden das Pulver und die feste hydrophobe Substanz miteinander gemischt und bis über den Schmelzpunkt der hydrophoben Substanz erwärmt. In einer weiteren Alternative kann der Auftrag der hydrophoben Substanz auf die Pulverpartikel mittels einer oder mehrerer Düsen erfolgen.

Erfolgt die Herstellung des Pulvers nach dem in der DE 29 06 647 beschriebenen Verfahren, können die hydrophoben Substanzen vor der Fällung in der Lösung oder bevorzugt nach der Fällphase der Suspension zugegeben werden.

Ein weiterer Gegenstand der Erfindung ist ein Powder Bed Fusion-Verfahren, bei dem ein erfindungsgemäßes Polymerpulver eingesetzt wird. Ein bevorzugtes Powder Bed Fusion-Verfahren ist ausgewählt aus dem selektiven Lasersinern, dem Selective Absorbing Sintering und dem Selective Inhibition Sintering.

Formkörper, die aus dem Powder Bed Fusion-Verfahren erhalten werden, sind ein weiterer Gegenstand der Erfindung.

### Beispiele

### Beispiel 1: Polyamid 12 Pulver PA2200 (nicht erfindungsgemäß)

Bei dem PA2200 handelt sich um ein Pulver der Firma EOS GmbH für den Einsatz im selektiven Lasersintern. Der etarel-Wert beträgt 1,60.

### Beispiel 2: Polyamid 11 Duraform EX (nicht erfindungsgemäß)

Bei dem Duraform EX handelt sich um ein Pulver der Firma 3D-systems für den Einsatz im selektiven Lasersintern, etarel-Wert ist 1,85.

### Beispiel 3: Polyamid 613 Fällpulver (PA 613) (nicht erfindungsgemäß)

Ein Polyamid 613 Granulat mit einem etarel-Wert von 1,65 wird mittels eines Fällverfahrens, wie in der DE 10 2004 020 453 beschrieben, in Ethanol gefällt und anschließendem bei 200µm Schutzgesiebt. In Tabelle 1 sind die daraus resultierenden Pulvereigenschaften aufgeführt.

### Beispiel 4: Polyamid 106 Fällpulver (PA 106) (nicht erfindungsgemäß)

Ein Polyamid 106 Granulat mit einem etarel-Wert von 1,81 wird wird mittels eines Fällverfahrens, wie es zum Beispiel in der DE 29 06 647 beschrieben ist, in Ethanol gefällt und anschließendem bei 200µm Schutzgesiebt. In Tabelle 1 sind die daraus resultierenden Pulvereigenschaften aufgeführt.

### Beispiel 5: Polyamid 12 Pulver (erfindungsgemäß)

10kg des Pulvers aus Beispiel 1 wird mit einem Alkan beschichtet. Dazu wird 500g Tetracosan in 1500g 1-Butanol gelöst und mit dem Pulver in einem Mixaco-Mischer CM50 D eine Minute bei 150U/min gemischt. Danach wird das 1-Butanol durch Trocknung abgezogen und das verbleibende Pulver bei 200µm Schutzgesiebt. In Tabelle 1 sind die daraus resultierenden Pulvereigenschaften aufgeführt.

### Beispiel 6: Polyamid 11 Pulver (erfindungsgemäß)

10kg des Pulvers aus Beispiel 2 wird mit einem Alkangemisch (H&R WAX 58/60 DAB) beschichtet. Dazu wird 100g Alkangemisch in 750g 1-Hexanol gelöst und mit dem Pulver in einem Mixaco-Mischer CM50 D eine Minute bei 150U/min gemischt. Danach wird das 1-Hexanol durch Trocknung abgezogen und das verbleibende Pulver bei 200µm Schutzgesiebt. In Tabelle 1 sind die daraus resultierenden Pulvereigenschaften aufgeführt.

### Beispiel 7: Polyamid 613 Pulver (erfindungsgemäß)

Das 613 Granulat aus Beispiel 3 wird mittels eines Fällverfahrens, wie in der DE 10 2004 020 453 beschrieben, in Ethanol gefällt und anschließendem der Suspension 10 Teile Tetracosan (25%Lösung in 1-Butanol) bezogen auf die Pulvermasse zugegeben. Die Suspension wird getrocknet und anschließend bei 200µm Schutzgesiebt. In Tabelle 1 sind die daraus resultierenden Pulvereigenschaften aufgeführt.

### Beispiel 8: Polyamid 106 Pulver (erfindungsgemäß)

Das 106 Granulat aus Beispiel 4 wird mittels eines Fällverfahrens, wie es zum Beispiel in der DE 29 06 647 beschrieben ist, in Ethanol gefällt und anschließend der Suspension 14 Teile Hexatriacontan (25%Lösung in 1-Butanol) bezogen auf die Pulvermasse zugegeben. Die Suspension wird getrocknet und anschließend bei 200µm Schutzgesiebt. In Tabelle 1 sind die daraus resultierenden Pulvereigenschaften aufgeführt.

### Beispiel 9: Polyamid 12 Pulver (erfindungsgemäß)

10kg des Pulvers aus Beispiel 1 wird mit einem Fettalkohol beschichtet. Dazu wird 600g 1-Hexadecanol in 1500g 1-Butanol gelöst und mit dem Pulver in einem Mixaco-Mischer CM50 D eine Minute bei 150U/min gemischt. Danach wird das 1-Butanol durch Trocknung abgezogen und das verbleibende Pulver bei 200µm Schutzgesiebt. In Tabelle 1 sind die daraus resultierenden Pulvereigenschaften aufgeführt.

### Beispiel 10: Polyamid 12 Pulver (erfindungsgemäß)

10kg des Pulvers aus Beispiel 1 wird mit einem Fett beschichtet. Dazu wird 200g Triolein in 1500g 1-Butanol gelöst und mit dem Pulver in einem Mixaco-Mischer CM50 D eine Minute bei 150U/min gemischt. Danach wird das 1-Butanol durch Trocknung abgezogen und das verbleibende Pulver bei 200µm Schutzgesiebt. In Tabelle 1 sind die daraus resultierenden Pulvereigenschaften aufgeführt.

In der Tabelle 1 sind die Kennwerte der Pulver aus den Beispielen aufgeführt. Es ist zu erkennen, dass die Oberflächenenergie durch die Zugabe der hydrophoben Substanzen reduziert werden konnte. Die Kornverteilung hat sich durch die Zugabe der Alkane praktisch nicht geändert.

**Tabelle 1: Korngrößen und Oberflächenenergien der Polymerpulver**

| | Polyamid | Oberflächenenergie | Korngröße d₉₀ | Korngröße d₅₀ | Korngröße d₁₀ |
|---|---|---|---|---|---|
| | | [mN/m] | [µm] | [µm] | [µm] |
| Bsp.1* | 12 | 38 | 82 | 58 | 39 |
| Bsp.2* | 11 | 37 | 77 | 47 | 19 |
| Bsp.3* | 613 | 39 | 132 | 89 | 50 |
| Bsp.4* | 106 | 39 | 90 | 63 | 44 |
| Bsp.5 | 12 | 28 | 80 | 58 | 37 |
| Bsp.6 | 11 | 30 | 77 | 48 | 22 |
| Bsp.7 | 613 | 32 | 130 | 88 | 50 |
| Bsp.8 | 106 | 33 | 91 | 62 | 45 |
| Bsp.9 | 12 | 29 | 79 | 57 | 37 |
| Bsp.10 | 12 | 31 | 80 | 58 | 38 |

| | | | | | |
|---|---|---|---|---|---|
| * nicht erfindungsgemäß | | | | | |

Die Pulver der Beispiele werden alle jeweils nach der folgenden Beschreibung auf einer EOSINT P380 verarbeitet. Die Baukammer wird 180 Minuten auf eine Temperatur vorgeheizt, die 20°C unter dem DSC-Schmelzpunkt (DIN 53765, DSC 7 v. Perkin Elmer Heizrate 20K/min) des Polymers liegt. Danach wird die Temperatur in der Baukammer auf 10°C unter dem DSC-Schmelzpunkt des Polymers erhöht. Vor der ersten Belichtung werden 40 Schichten ohne Belichtung aufgetragen.

Das zu belichtende Bauteil wird zentral im Baufeld positioniert. Eine quadratische Fläche mit einer Kantenlänge von 50 mm wird mittels des Lasers aufgeschmolzen. Der Energieeintrag des Lasers beträgt 60 mJ/mm² (Laserleistung 21 W, Scangeschwindigkeit 1170 mm/s, Abstand Belichtungslinien 0,3 mm). Danach wird die Bauplattform um 0,15 mm abgesenkt und mittels eines Beschichters eine neue Pulverschicht mit einer Geschwindigkeit von 100 mm/s aufgetragen. Diese Schritte werden wiederholt bis ein 50 mm hohes dreidimensionales Bauteil entsteht. Nach Abschluss der Belichtung werden noch 40 weitere Schichten aufgetragen, bevor die Heizelemente der Vorrichtung ausgeschaltet und die Abkühlphase eingeleitet wird. Die Zeit, die jeweils für eine Schicht benötigte wird, liegt während des gesamten Bauprozesses unter 40 s.

Nach einer Abkühlzeit von mindestens 12 Stunden wird das Bauteil entnommen und vom anhaftenden Pulver befreit. Die Maße des Bauteils werden ermittelt, die Masse des Bauteils gewogen und daraus die Dichte berechnet. In der Tabelle 2 sind die Bauteildichten der Beispiele aufgeführt. Es ist zu erkennen, dass die Bauteile, welche aus den erfindungsgemäßen Pulvern hergestellt worden sind, eine höhere Dichte aufweisen als die vergleichbaren nicht erfindungsgemäßen Pulver. Mit den erfindungsgemäßen Pulvern konnte also ein besseres Zusammenfließen der Schmelze erreicht werden.

### Tabelle 2: Dichte der erhaltenen Bauteile

**Tabelle 2**

| Bauteil | Polyamid | Bauteildichte [g/cm³] |
|---|---|---|
| Beispiel 1 | 12 | 0,93 |
| Beispiel 2 | 11 | 0,98 |
| Beispiel 3 | 613 | 0,99 |
| Beispiel 4 | 106 | 0,99 |
| Beispiel 5 | 12 | 0,97 |
| Beispiel 6 | 11 | 1,01 |
| Beispiel 7 | 613 | 1,02 |
| Beispiel 8 | 106 | 1,02 |
| Beispiel 9 | 12 | 0,96 |
| Beispiel 10 | 12 | 0,95 |

## Patentansprüche

1. Polymerpulver zur Verwendung in einem Powder Bed Fusion-Verfahren, **dadurch gekennzeichnet, dass** das Polymerpulver mit einer hydrophoben Substanz beschichtet ist, welche ausgewählt ist aus der Gruppe bestehend aus gesättigten oder ungesättigten Fettalkoholen, gesättigten und ungesättigten Fetten, Wachsen, Lactamen, Alkenen, Alkanen und Mischungen daraus.

2. Polymerpulver nach Anspruch 1, **dadurch gekennzeichnet, dass** die hydrohpobe Substanz ausgewählt ist aus Alkanen, Alkenen und Mischungen daraus.

3. Polymerpulver nach einem der vorherigen Ansprüche, **dadurch gekennzeichnet, dass** das Polymer des Polymerpulvers ausgewählt ist aus Polyamid und Copolyamid.

4. Polymerpulver nach einem der vorherigen Ansprüche, **dadurch gekennzeichnet, dass** die Sphärizität nach Wadell mindestens 0,5 beträgt.

5. Polymerpulver nach einem der vorherigen Ansprüche, **dadurch gekennzeichnet, dass** der Anteil der hydrophoben Substanz 0,15 bis 20 Gew.-%, bezogen auf das Gesamtgewicht aus Polymerpulver und der hydrophoben Substanz, ausmacht.

6. Polymerpulver nach einem der vorherigen Ansprüche, **dadurch gekennzeichnet, dass** die hydrophobe Substanz einen Schmelzpunkt von maximal 160 °C und einen Siedepunkt von mindestens 190 °C aufweist.

7. Verfahren zur Herstellung eines Polymerpulvers nach einem der vorherigen Ansprüche, **dadurch gekennzeichnet, dass** das Polymerpulver mit einer hydrophoben Substanz beschichtet wird.

8. Verfahren nach Anspruch 7, **dadurch gekennzeichnet, dass** die Beschichtung bei einer Temperatur von maximal 100 °C erfolgt.

9. Verfahren nach Anspruch 7 oder 8, **dadurch gekennzeichnet, dass** die Beschichtung in einer Suspension erfolgt.

10. Powder Bed Fusion-Verfahren, bei dem ein Polymerpulver nach einem der Ansprüche 1 bis 6 eingesetzt wird.

11. Formkörper, erhältlich aus einem Verfahren nach Anspruch 10, wobei Polymerpulver eingesetzt wird, das mit einer hydrophoben Substanz beschichtet ist, welche ausgewählt ist aus der Gruppe bestehend aus gesättigten oder ungesättigten Fettalkoholen, gesättigten und ungesättigten Fetten, Wachsen, Lactamen, Alkenen und Mischungen daraus.

## Claims

1. Polymer powder for use in a powder bed fusion method, **characterized in that** the polymer powder has been coated with a hydrophobic substance selected from the group consisting of saturated or unsaturated fatty alcohols, saturated and unsaturated fats, waxes, lactams, alkenes, alkanes and mixtures thereof.

2. Polymer powder according to Claim 1, **characterized in that** the hydrophobic substance is selected from alkanes, alkenes and mixtures thereof.

3. Polymer powder according to either of the preceding claims, **characterized in that** the polymer of the polymer powder is selected from polyamide and copolyamide.

4. Polymer powder according to any of the preceding claims, **characterized in that** the Wadell sphericity is at least 0.5.

5. Polymer powder according to any of the preceding claims, **characterized in that** the proportion of the hydrophobic substance accounts for 0.15% to 20% by weight, based on the total weight of polymer powder and the hydrophobic substance.

6. Polymer powder according to any of the preceding claims, **characterized in that** the hydrophobic substance has a melting point of not more than 160°C and a boiling point of at least 190°C.

7. Method for producing a polymer powder according to any of the preceding claims, **characterized in that** the polymer powder is coated with a hydrophobic substance.

8. Method according to Claim 7, **characterized in that** the coating is effected at a temperature of not more than 100°C.

9. Method according to Claim 7 or 8, **characterized in that** the coating is effected in a suspension.

10. Powder bed fusion method, in which a polymer powder according to any of Claims 1 to 6 is used.

11. Shaped body obtainable from a process according to Claim 10, wherein polymer powder coated with a hydrophobic substance selected from the group consisting of saturated or unsaturated fatty alcohols, saturated and unsaturated fats, waxes, lactams, alkenes and mixtures thereof is used.

## Revendications

1. Poudre de polymère pour l'utilisation dans un procédé de fusion sur lit de poudre, **caractérisée en ce que** la poudre de polymère est revêtue par une substance hydrophobe, qui est choisie dans le groupe constitué par les alcools gras saturés ou insaturés, les graisses saturées et insaturées, les cires, les lactames, les alcènes, les alcanes et des mélanges correspondants.

2. Poudre de polymère selon la revendication 1, **caractérisée en ce que** la substance hydrophobe est choisie parmi les alcanes, les alcènes et des mélanges correspondants.

3. Poudre de polymère selon l'une quelconque des revendications précédentes, **caractérisée en ce que** le polymère de la poudre de polymère est choisi parmi le polyamide et le co-polyamide.

4. Poudre de polymère selon l'une quelconque des revendications précédentes, **caractérisée en ce que** la sphéricité selon Wadell est d'au moins 0,5.

5. Poudre de polymère selon l'une quelconque des revendications précédentes, **caractérisée en ce que** la proportion de la substance hydrophobe représente 0,15 à 20 % en poids par rapport au poids total de la poudre de polymère et de la substance hydrophobe.

6. Poudre de polymère selon l'une quelconque des revendications précédentes, **caractérisée en ce que** la substance hydrophobe présente un point de fusion d'au maximum 160 °C et un point d'ébullition d'au moins 190 °C.

7. Procédé pour la préparation d'une poudre de polymère selon l'une quelconque des revendications précédentes, **caractérisé en ce que** la poudre de polymère est revêtue par une substance hydrophobe.

8. Procédé selon la revendication 7, **caractérisé en ce que** le revêtement est réalisé à une température d'au maximum 100 °C.

9. Procédé selon la revendication 7 ou 8, **caractérisé en ce que** le revêtement est réalisé dans une suspension.

10. Procédé de fusion sur lit de poudre, dans lequel une poudre de polymère selon l'une quelconque des revendications 1 à 6 est utilisée.

11. Article moulé, pouvant être obtenu par un procédé selon la revendication 10, une poudre de polymère étant utilisée qui est revêtue par une substance hydrophobe, qui est choisie dans le groupe constitué par les alcools gras saturés ou insaturés, les graisses saturées et insaturées, les cires, les lactames, les alcènes et des mélanges correspondants.
